# EUROPEAN PATENT SPECIFICATION

(11) **EP 2 196 727 B1**
(45) Date of publication and mention of the grant of the patent: **24.12.2014**
(21) Application number: 09014618.4
(22) Date of filing: 24.11.2009
(51) Int. Cl.: F21S 8/12

(54) **Vehicular illumination lamp**
Fahrzeugausleuchtungslampe
Lampe d'éclairage véhiculaire

(30) Priority: 09.12.2008 JP 2008313277
(43) Date of publication of application: 16.06.2010
(73) Proprietor: Koito Manufacturing Co., Ltd., Tokyo 108-8711 (JP)
(72) Inventor: Mochizuki, Mitsuyuki, Shizuoka-shi, Shizuoka (JP)
(74) Representative: Hoffmann Eitle

(56) References cited:
- EP-A1- 1 935 715
- US-A1- 2005 068 787
- US-A1- 2008 225 544

## Description

### [Technical Field]

The present invention relates to a vehicular illumination lamp configured so as to form an additional light distribution pattern for high beam, and particularly relates to a vehicular illumination lamp with light-emitting elements serving as a light source.

### [Related Art]

Recently, a light-emitting element such as a light-emitting diode has been increasingly employed as a light source for a vehicular illumination lamp that composes a headlamp.

For example, Patent Document 1 describes a vehicular illumination lamp that forms an additional light distribution pattern for high beam (that is, a light distribution pattern formed in addition to a low-beam distribution pattern when a high-beam distribution pattern is formed) by using a lamp unit with a plurality of light-emitting elements serving as a light source.

In the vehicular illumination lamp described in Patent Document 1, the plurality of light-emitting elements are configured to be arranged horizontally side by side with each other in the vicinity of a rear focal plane of a projection lens, and by synthesizing the light distribution patterns formed as inverted projection images of these light-emitting elements, the additional light distribution pattern for high beam is formed.

In addition, Patent Document 2 discloses the preamble of claim 1 and particularly describes a lamp unit that includes a projection lens arranged on an optical axis extending in the vehicular longitudinal direction, a pair of light-emitting elements arranged facing upward and downward, respectively, in the vicinity of the optical axis and on the rear side of a rear side focal point of the projection lens, a pair of reflectors that are arranged so as to cover the pair of light-emitting elements from above and below, respectively, and that reflect light from the light-emitting elements in the direction approaching the optical axis toward the front, and a double-sided mirror piece that is provided between the pair of reflectors and the projection lens is arranged so as to extend generally along a horizontal plane including the optical axis and that is formed so that a front end edge thereof passes through the rear side focal point of the projection lens, the double-sided mirror piece being configured so as to reflect part of reflected light from the upper side reflector upward and part of reflected light from the lower side reflector downward.
[Patent Document 1]
   Japanese Patent Application Laid-Open (Kokai) No. JP-A-2007-179969
[Patent Document 2]
   Japanese Patent Application Laid-Open (Kokai) No. JP-A-2005-108554

### [Disclosure of the Invention]

### [Problem to be Solved by the Invention]

In the vehicular illumination lamp described in Patent Document 1, a plurality of light distribution patterns are formed in a horizontally parallel manner by the radiated light. Therefore, if each of the light-emitting elements is controlled to turn on and off so that the plurality of light distribution patterns do not include a light distribution pattern to be formed at a location of an oncoming vehicle or a leading vehicle, it is made possible to improve visibility of an area ahead of a vehicle without giving glare to the driver of the oncoming vehicle or the leading vehicle.

However, because these light distribution patterns are formed as inverted projection images of light-emitting chips of the light-emitting elements, it is difficult to obtain clear outlines of the side end edges of the patterns. Consequently, there is a problem that, if glare is prevented from being given to the driver of the oncoming vehicle or the leading vehicle, the light irradiation range in the area ahead of the vehicle is limited by a large degree.

In view of the situation described above, it is an object of the present invention to provide a vehicular illumination lamp configured so as to form an additional light distribution pattern for high beam, the vehicular illumination lamp being capable of improving visibility of an area ahead of a vehicle without giving glare to a driver of an oncoming vehicle or a leading vehicle.

### [Means for Solving the Problem]

The present invention intends to achieve the object by providing a configuration in which a lamp unit is swiveled by a swivel mechanism in the horizontal direction, and in addition, by providing a configuration in which a pair of right and left light distribution patterns having distinct outlines of the side end edges thereof can be formed with light radiated from the lamp unit.

In other words, a vehicular illumination lamp according to the present invention is configured so as to form an additional light distribution pattern in addition to a low-beam distribution pattern when a high-beam distribution pattern is formed, the vehicular illumination lamp being characterized by including a lamp unit that includes: a projection lens arranged on an optical axis extending in the vehicular longitudinal direction; a pair of light-emitting elements arranged facing toward the left side and the right side, respectively, in the vicinity of the optical axis and on the rear side of a rear side focal point of the projection lens; a pair of reflectors that are arranged so as to cover the pair of light-emitting elements from the left side and the right side, respectively, and that reflect light from the light-emitting elements in the direction approaching the optical axis toward the front; and a double-sided mirror piece that is arranged so as to extend generally along a vertical plane including the optical axis between the pair of reflectors and the projection lens and that is formed so that a front end edge thereof passes through the rear side focal point of the projection lens, the double-sided mirror piece being configured so as to reflect part of reflected light from the left reflector toward the left side and part of reflected light from the right reflector toward the right side, and also in including a swivel mechanism that swivels the lamp unit in the horizontal direction.

The "light-emitting element" denotes a light source in the form of an element having a light emitting-chip that performs surface emission generally in the shape of a point. There is no particular limitation to the type of the light-emitting element. For example, it is possible to employ a light-emitting diode or a laser diode.

A pair of right and left reflective surfaces of the "double-sided mirror piece" may be formed as flat surfaces parallel to the vertical plane including the optical axis, or may be formed as flat surfaces or curved surfaces somewhat inclined from the parallel surfaces, as far as the double-sided mirror piece is arranged so as to extend generally along the vertical plane including the optical axis.

The "front end edge" of the double-sided mirror piece may obviously be formed so as to extend in the vertical direction, and may also be formed so as to extend in the direction somewhat inclined from the vertical direction.

### [Effects of the Invention]

As shown in the configuration, the vehicular illumination lamp according to the present invention is provided with the projector-type lamp unit that is arranged with the pairs of right and left light-emitting elements and reflectors in the rear of the projection lens. This lamp unit is configured such that the double-sided mirror piece that is arranged so as to extend generally along the vertical plane including the optical axis of the lamp unit and that is formed so that the front end edge thereof passes through the rear side focal point of the projection lens reflects part of reflected light from the left reflector toward the left side and also reflects part of reflected light from the right reflector toward the right side. Therefore, the following effects are obtained.

In other words, a first light distribution pattern formed with the reflected light from the left reflector is formed at the left end edge thereof with a vertical cut-off line extending generally in the vertical direction in the forward direction of the lamp as an inverted projection image of the front end edge of the double-sided mirror piece. On the other hand, a second light distribution pattern formed with the reflected light from the right reflector is formed at the right end edge thereof with a vertical cut-off line extending generally in the vertical direction in the forward direction of the lamp as an inverted projection image of the front end edge of the double-sided mirror piece.

In that situation, because the left end portion of the first light distribution pattern is formed by synthesizing light that directly reaches the projection lens after being reflected from the left reflector and light that reaches the projection lens after being reflected from the left reflector and then reflected by the double-sided mirror piece, distinction of the vertical cut-off line can be sufficiently ensured. In the same manner, because the right end portion of the second light distribution pattern is formed by synthesizing light that directly reaches the projection lens after being reflected from the right reflector and light that reaches the projection lens after being reflected from the right reflector and then reflected by the double-sided mirror piece, distinction of the vertical cut-off line can be sufficiently ensured.

Consequently, by lighting the left light-emitting element, the first light distribution pattern having the distinct vertical cut-off line at the left end edge is formed in a manner extending toward the right side from the directly forward direction of the lamp. On the other hand, by lighting the right light-emitting element, the second light distribution pattern having the distinct vertical cut-off line at the right end edge is formed in a manner extending toward the left side from the directly forward direction of the lamp. In addition, by lighting both the light-emitting elements at the same time, a third light distribution pattern that is provided by synthesizing the first and the second light distribution patterns is formed in a manner extending toward both the right and left sides from the directly forward direction of the lamp, in a state in which both of the vertical cut-off lines generally coincide with each other.

Moreover, in the vehicular illumination lamp according to the present invention, because the lamp unit is configured to be swiveled in the horizontal direction by driving the swivel mechanism, any one of the first, the second, and the third light distribution patterns can be selectively displaced in the lateral direction as an additional light distribution pattern for high beam.

In that situation, by displacing the first light distribution pattern in the lateral direction, the vertical cut-off line of the pattern can be formed in a state of being located near the right side of an oncoming vehicle or a leading vehicle. On the other hand, by displacing the second light distribution pattern in the lateral direction, the vertical cut-off line of the pattern can be formed in a state of being located near the left side of the oncoming vehicle or the leading vehicle. In addition, when there is neither the oncoming vehicle nor the leading vehicle, a diffusion light distribution pattern can be formed in an appropriate direction depending on the degree of curvature of the vehicle running path, and so on, by displacing the third light distribution pattern in the lateral direction.

As described above, with the present invention, in the vehicular illumination lamp configured so as to form the additional light distribution pattern for high beam, visibility of the area ahead of the vehicle can be improved without giving glare to the driver of the oncoming vehicle or the leading vehicle.

With this configuration, if the vehicular illumination lamp is configured to include two sets of the lamp unit and the swivel mechanism, it is made possible by appropriately combining the directions of both the lamp units to radiate light to areas on both the right and left sides of the vehicle without giving glare to the driver of the oncoming vehicle or the leading vehicle. Consequently, visibility of the area ahead of the vehicle can be further improved.

Note that, even in the case in which the vehicular illumination lamp is provided with only one set of the lamp unit and the swivel mechanism, a pair of headlamps are generally arranged at both the right and left sides of the vehicle front end portion. Therefore, by appropriately combining the direction of the lamp unit in the vehicular illumination lamp of the left headlamp and the direction of the lamp unit in the vehicular illumination lamp of the right headlamp, it is made possible to radiate light to areas on both the right and left sides of the vehicle without giving glare to the driver of the oncoming vehicle or the leading vehicle. Consequently, visibility of the area ahead of the vehicle can be sufficiently improved.

With this configuration, if the double-sided mirror piece is configured to have a horizontal cross-sectional shape of a generally wedge shape having, as the apex thereof, the rear side focal point of the projection lens, the third light distribution pattern can be formed as a light distribution pattern in which the vertical cut-off line of the first light distribution pattern and the vertical cut-off line of the second light distribution pattern coincide with each other without a gap therebetween.

With this configuration, if the front end edge of the double-sided mirror piece is configured to be formed so as to pass not through the rear side focal point of the projection lens but through a point located on the rear side of the rear side focal point, the third light distribution pattern can be formed as a light distribution pattern in which the first light distribution pattern and the second light distribution pattern partially overlap with each other, although the distinction of both the vertical cut-off lines is somewhat degraded.

### [BRIEF DESCRIPTION OF THE DRAWINGS]

[FIG. 1]

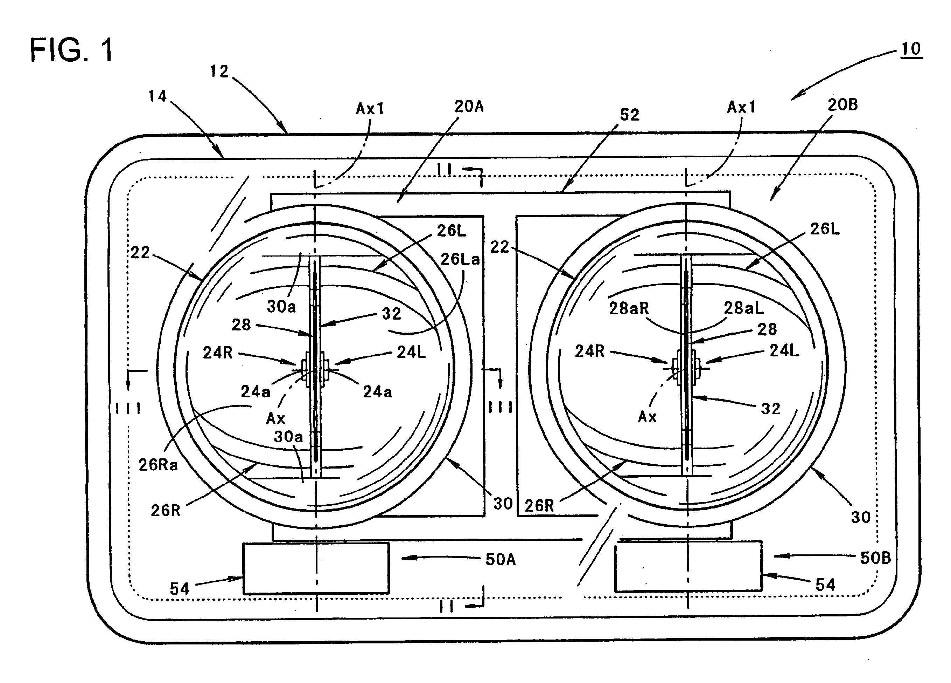

   FIG. 1 is a front view showing a vehicular illumination lamp according to an embodiment of the present invention.
[FIG. 2]

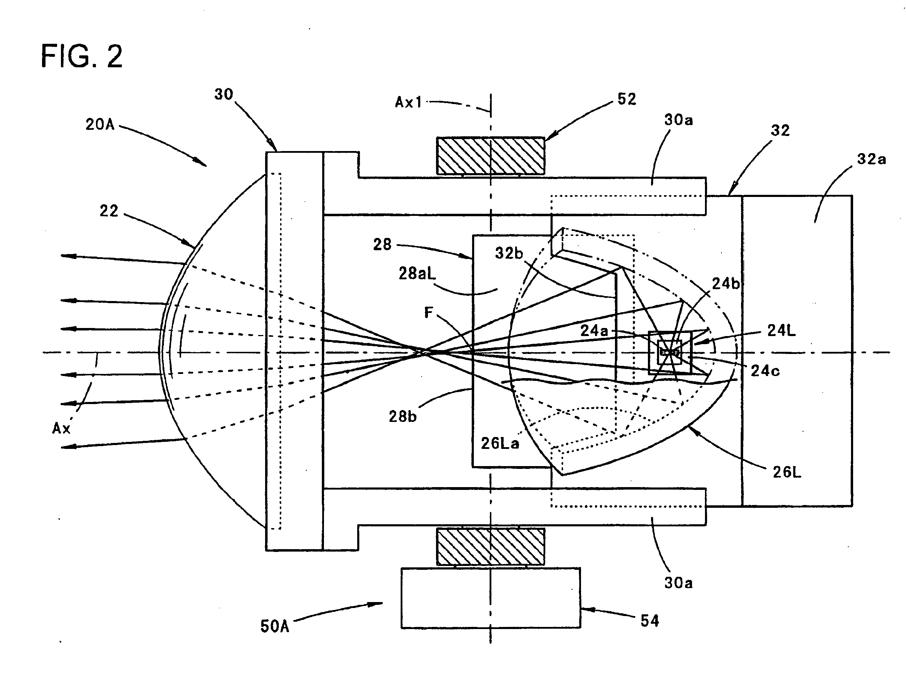

   FIG. 2 is a cross-sectional view taken along a II-II line in FIG. 1.
[FIG. 3]

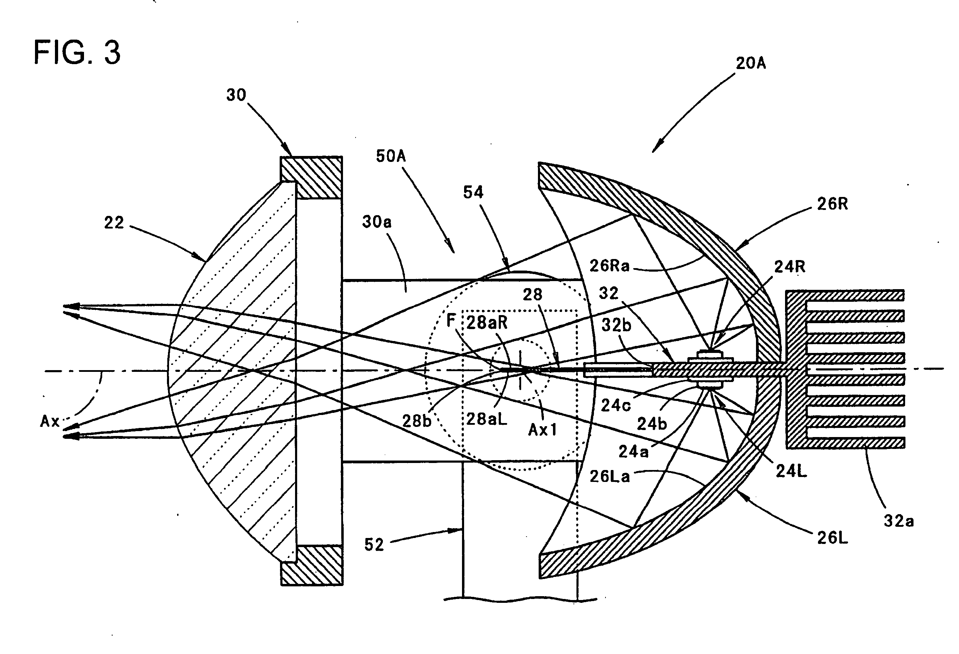

   FIG. 3 is a cross-sectional view taken along a III-III line in FIG. 1.
[FIG. 4]

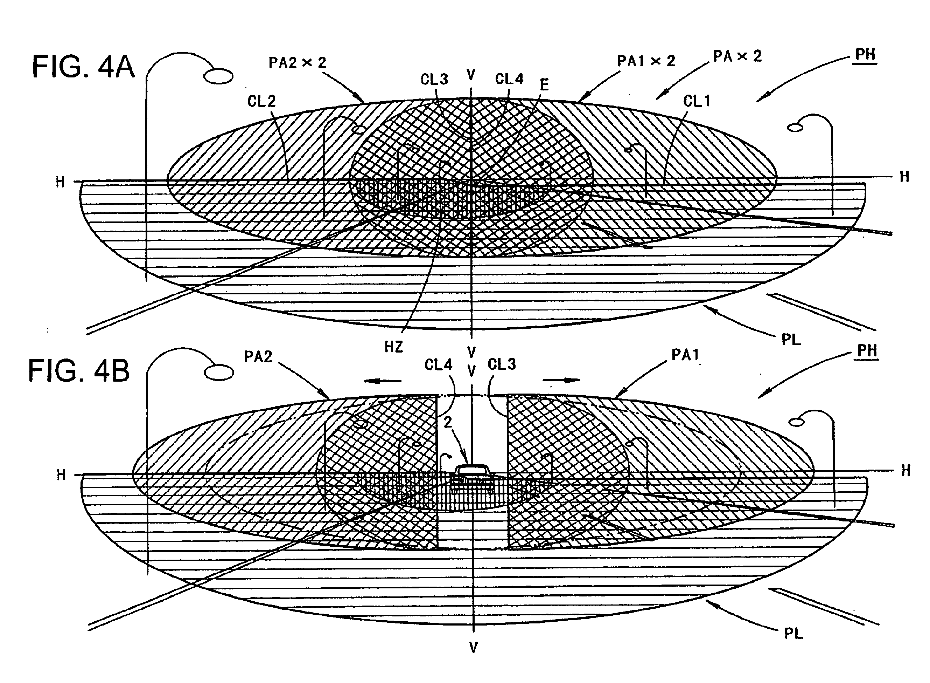

   FIG. 4A is a view that transparently shows additional light distribution patterns formed, with light radiated forward from the vehicular illumination lamp, in a duplicate manner on a virtual vertical screen arranged at a location 25 m ahead of a vehicle, together with a low-beam distribution pattern formed with light radiated from another vehicular illumination lamp; and FIG. 4B is a view similar to FIG. 4A that shows another additional light distribution pattern different from the additional light distribution patterns.
[FIG. 5]

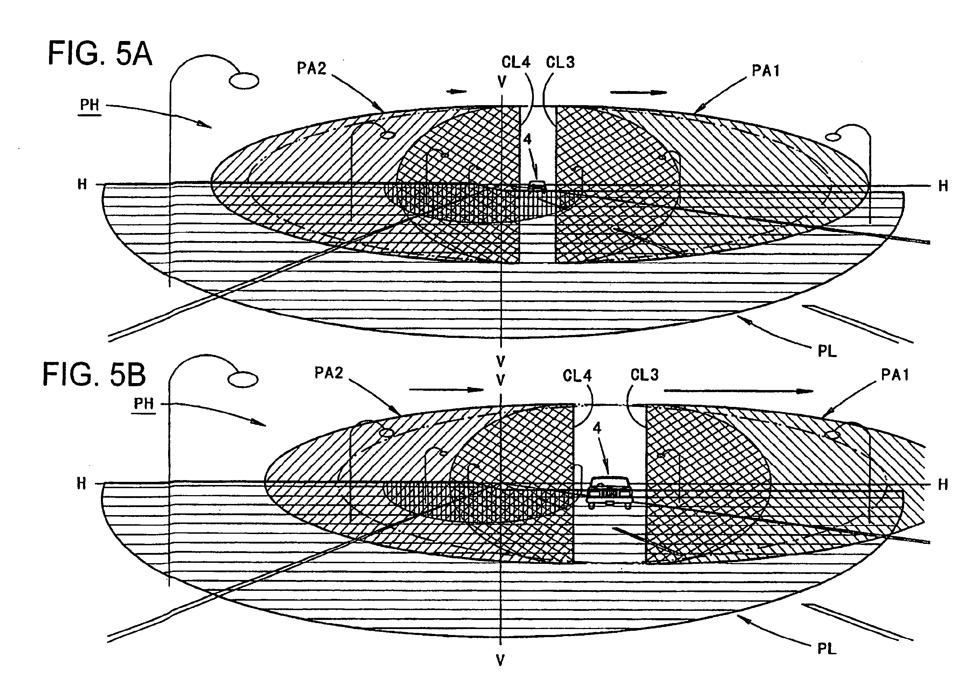

   FIG. 5 shows views similar to FIG. 4 that illustrates two kinds of additional light distribution patterns further different from the additional light distribution patterns.
[FIG. 6]

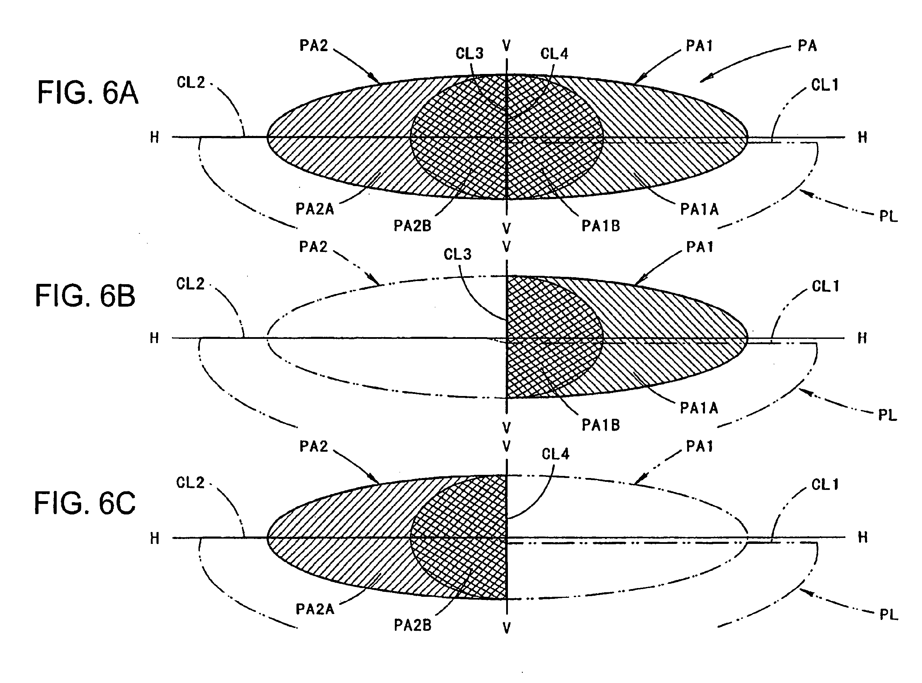

   FIG. 6 shows views, each of which illustrates an additional light distribution pattern formed on the virtual vertical screen with light radiated from one lamp unit in the vehicular illumination lamp.
[FIG. 7]

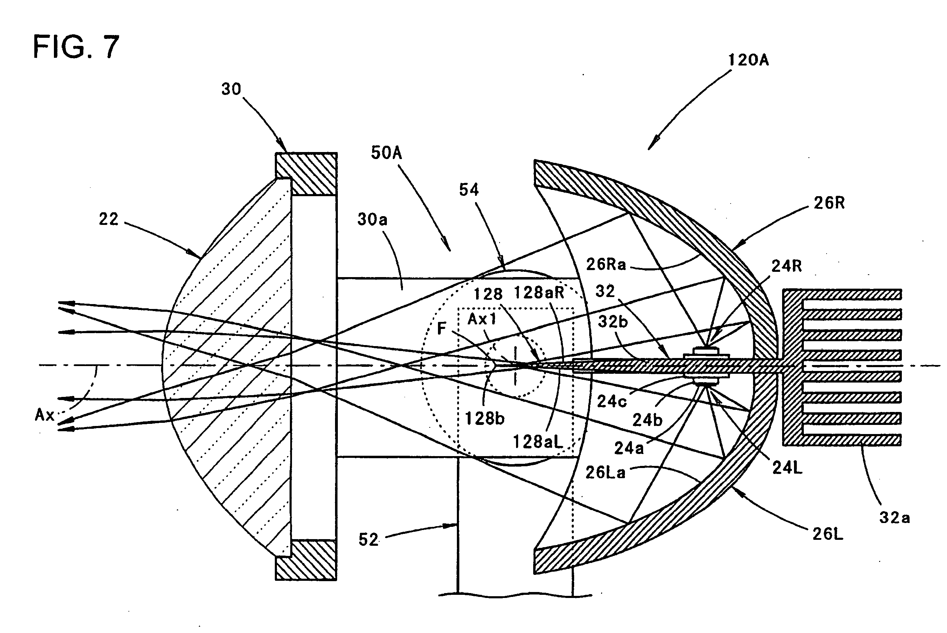

   FIG. 7 is a view similar to FIG. 3 that shows a first modification of the lamp unit.
[FIG. 8]

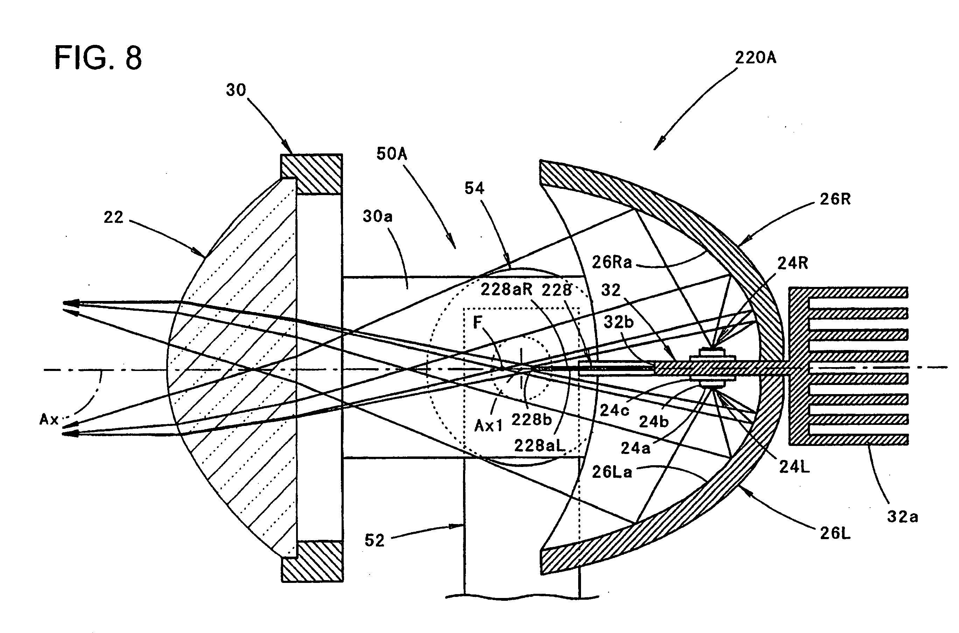

   FIG. 8 is a view similar to FIG. 3 that shows a second modification of the lamp unit.
[FIG. 9]

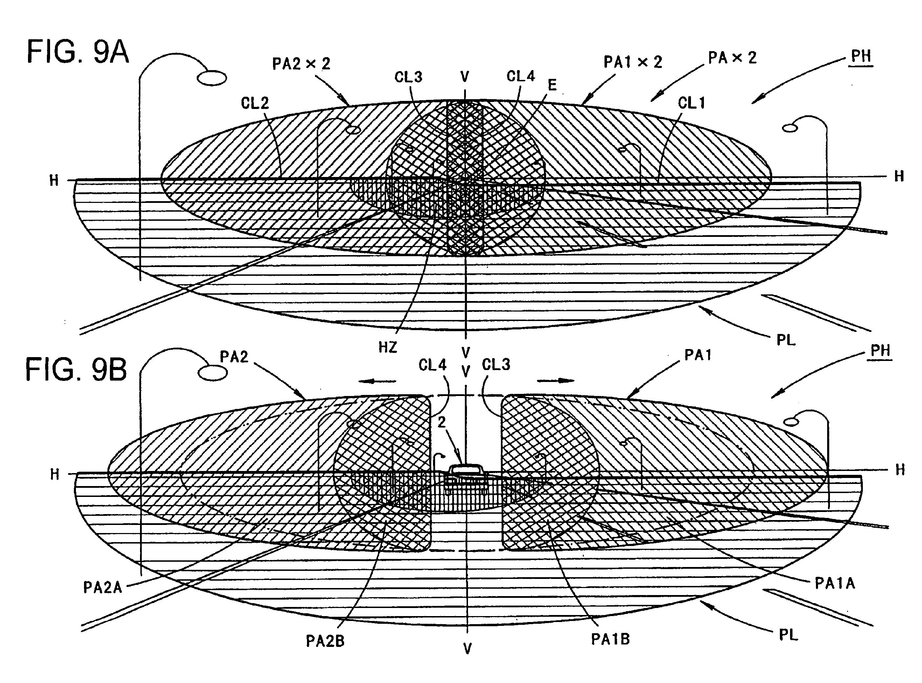

   FIG. 9 shows views similar to FIG. 4 that illustrates operations of a vehicular illumination lamp provided with the lamp unit of the second modification.

### [Best Mode for Carrying Out the Invention]

Hereafter, an embodiment according to the present invention will be described by using drawings. FIG. 1 is a front view showing a vehicular illumination lamp 10 according to a preferred embodiment of the present invention.

As shown in the same figure, the vehicular illumination lamp 10 according to the present embodiment has a configuration in which a lamp chamber formed with a lamp body 12 and with a translucent cover 14 mounted at a front end opening of the lamp body 12 houses a pair of right and left lamp units 20A, 20B and a pair of swivel mechanisms 50A, 50B that independently swivel the lamp units 20A, 20B, respectively, in the horizontal direction.

In that situation, the two sets of the lamp units 20A, 20B and the swivel mechanisms 50A, 50B, respectively, have the same configurations as each other.

In this vehicular illumination lamp 10, under a standard condition in which light axis adjustment of each of the lamp units 20A, 20B has been completed and swiveling drive is not performed by each of the swivel mechanisms 50A, 50B, each optical axis Ax of each of the lamp units 20A, 20B extends to the forward direction of a vehicle.

In addition, in this vehicular illumination lamp 10, the light radiated from both the lamp units 20A, 20B forms identical additional light distribution patterns PA in a duplicate manner, as shown in FIG. 4A. These additional light distribution patterns PA are light distribution patterns that are formed in addition to a low-beam distribution pattern PL formed with light radiated from another vehicular illumination lamp (not shown), and as a synthesized light distribution pattern of the aforementioned patterns, a high-beam distribution pattern PH is formed.

Note that the additional light distribution patterns PA are also formed in forms other than the form shown in FIG. 4A. However, description will be made later in this respect.

Hereafter, configurations of the one lamp unit 20A and the one swivel mechanism 50A will be described.

FIG. 2 is a cross-sectional view taken along a II - II line in FIG. 1, and FIG. 3 is a cross-sectional view taken along a III - III line in FIG. 1.

As shown in these figures, the lamp unit 20A is provided with a projection lens 22 arranged on the optical axis Ax, a pair of light-emitting elements 24L, 24R arranged facing toward the left side and the right side, respectively, in the vicinity of the optical axis Ax and on the rear side of a rear side focal point F of the projection lens 22, a pair of reflectors 26L, 26R that are arranged so as to cover the pair of light-emitting elements 24L, 24R from the left side and the right side, respectively, and that reflect light from the light-emitting elements 24L, 24R in the direction approaching the optical axis Ax toward the front, and a double-sided mirror piece 28 that is arranged between the pair of reflectors 26L, 26R and the projection lens 22.

The projection lens 22 is composed of a plano-convex aspheric lens having a forward side surface as a convex surface and a rearward side surface as a flat surface, and projects a light source image formed on a rear focal plane of the lens as an inverted image on a virtual vertical screen in front of the lamp.

The projection lens 22 is fixedly supported by a lens holder 30 of a ring shape. The lens holder 30 is formed with a pair of bracket portions 30a extending rearward from rear surfaces of both upper and lower ends of the lens holder.

The pair of light-emitting elements 24L, 24R are white light-emitting diodes having the same configuration, which is composed of a light-emitting chip 24a constituting a horizontally-long rectangular light-emitting surface, a substrate 24b supporting the light-emitting chip 24a, and a metallic supporting plate 24c supporting the substrate 24b. In that situation, the light-emitting chip 24a is formed by horizontally arranging four light-emitting chips, each of which has a square light-emitting surface of approximately 1 mm on a side, so as to be generally in close contact with each other. In addition, the light-emitting chip 24a is sealed with a thin film that is formed so as to cover the light-emitting surface of the chip.

Each of the light-emitting elements 24L, 24R is fixedly supported by a metallic light source holder 32 via the supporting plate 24c. In that situation, the pair of light-emitting elements 24L, 24R are arranged in a laterally symmetrical positional relationship with respect to a vertical plane including the optical axis Ax.

The light source holder 32 is a plate member extending along the vertical plane including the optical axis Ax, and formed with a heat sink 32a at the rear end. The heat sink 32a is provided with a plurality of radiation fins extending in parallel with the vertical plane including the optical axis Ax. In addition, the light source holder 32 is fixedly supported at both the upper and lower ends thereof by the pair of upper and lower bracket portions 30a of the lens holder 30.

The pair of reflectors 26L, 26R have the same configuration with each other, and are arranged in a laterally symmetrical positional relationship with respect to the vertical plane including the optical axis Ax.

Each of reflective surfaces 26La, 26Ra of the reflectors 26L, 26R, respectively, is formed of a curved surface of a generally ellipsoidal shape having a major axis extending generally in parallel with the optical axis Ax and also having a first focal point at the center of light emission of each of the light-emitting elements 24L, 24R, and is set to gradually decrease in eccentricity from the horizontal cross-sectional plane toward the vertical cross-sectional plane. As a result, each of the reflectors 26L, 26R makes the light from each of the light-emitting elements 24L, 24R, respectively, substantially converge slightly in front of the rear side focal point F in the vertical cross-sectional plane, and moves the converging point forward by a large amount in the horizontal cross-sectional plane.

The pair of reflectors 26L, 26R are fixedly supported by the left and right side faces, respectively, of the light source holder 32.

The double-sided mirror piece 28 is a thin plate member extending along the vertical plane including the optical axis Ax, and has a configuration in which both surfaces thereof are treated with mirror processing. A front end edge 28b of the double-sided mirror piece 28 extends in the vertical direction so as to pass through the rear side focal point F. Then, the double-sided mirror piece 28 is formed so as to reflect, at a left reflective surface 28aL thereof, part of reflected light from the left reflector 26L toward the left side, and reflect, at a right reflective surface 28aR thereof, part of reflected light from the right reflector 26R toward the right side.

The double-sided mirror piece 28 is fixedly supported by the light source holder 32. In that situation, in order to prevent the reflected light from the reflectors 26L, 26R from being blocked by the light source holder 32 itself, a front end surface 32b of the light source holder 32 is formed so as to have a middle portion thereof that is offset rearward from both the upper and lower ends of the light source holder.

The swivel mechanism 50A is composed of a frame member 52 that supports the lamp unit 20A at the pair of upper and lower bracket portions 30a of the lens holder 30 so as to be rotatable around an axis line Ax1 extending in the vertical direction, and an actuator 54 that is fixed to the frame member 52 below the frame member 52 and that rotates the lamp unit 20A around the axis line Ax1.

As shown in FIG. 1, the frame member 52 of the swivel mechanism 50A is also used as the frame member 52 of the other swivel mechanism 50B. In other words, the other lamp unit 20B is also supported by the frame member 52 at the pair of upper and lower bracket portions 30a of the lens holder 30 so as to be rotatable around an axis line Ax1 extending in the vertical direction.

The frame member 52 is supported so as to be tiltable relative to the lamp body 12. Consequently, a light axis adjustment of both the lamp units 20A, 20B can be performed in one adjustment operation.

FIG. 4A is a view that transparently shows the additional light distribution patterns PA formed, with the light radiated forward from the vehicular illumination lamp 10 according to the present embodiment, in a duplicate manner on the virtual vertical screen arranged at a location 25 m ahead of the vehicle, together with the low-beam distribution pattern PL formed with the light radiated from another vehicular illumination lamp.

As described above, the high-beam distribution pattern PH is formed by adding the two additional light distribution patterns PA to the low-beam distribution pattern PL.

Before describing the two additional light distribution patterns PA, the low-beam distribution pattern PL will be described.

As shown in A of the same figure, the low-beam distribution pattern PL is a low-beam distribution pattern for left side light distribution, and has horizontal cut-off lines CL1, CL2 at the upper end edge thereof in a stepped fashion in the left-right direction.

The horizontal cut-off lines CL1, CL2 extend horizontally in a stepped fashion in the left-right direction at a boundary defmed by a line V-V that is a vertical line passing through a vanishing point H-V in the forward direction of the lamp. On the right side of the line V-V, the cut-off line is formed so as to extend horizontally as the horizontal cut-off line CL1 on the opposing-lane side, whereas on the left side of the line V-V, the cut-off line is formed so as to extend horizontally in a fashion stepped upward from the horizontal cut-off line CL1 as the horizontal cut-off line CL2 on the self-lane side. Note that the end portion of the horizontal cut-off line CL2 on the side near to the line V-V is formed as an oblique cut-off line that extends diagonally upward left at an inclination angle of 15° from an intersection point between the horizontal cut-off line CL1 and the line V-V.

In the low-beam distribution pattern PL, an elbow point E that is the intersection point between the horizontal cut-off line CL1 and the line V-V is located downward by approximately 0.5° to 0.6° from the point H-V, and a hot zone HZ serving as an area of high-intensity light is formed so as to surround the elbow point E slightly close to the left.

The two additional light distribution patterns PA are formed as the same light distribution pattern because the two lamp units 20A, 20B have the same configuration.

Note that the duplicate additional light distribution patterns PA shown in FIG 4A are light distribution patterns that are formed while both the lamp units 20A, 20B are under the standard condition (that is, the condition in which the swiveling drive is not performed by each of the swivel mechanisms 50A, 50B) and also when the pair of light-emitting elements 24L, 24R of both the lamp units 20A, 20B are lit at the same time.

FIG. 6 shows views, each of which illustrates an additional light distribution pattern formed on the virtual vertical screen with light radiated from the one lamp unit 20A (or 20B).

In that situation, the additional light distribution pattern PA shown in FIG. 6A is a light distribution pattern that is formed when the pair of light-emitting elements 24L, 24R of the lamp unit 20A under the standard condition are lit at the same time. In addition, an additional light distribution pattern PA1 shown in FIG. 6B is a light distribution pattern that is formed when only the left light-emitting element 24L is lit, and an additional light distribution pattern PA2 shown in FIG. 6C is a light distribution pattern that is formed when only the right light-emitting element 24R is lit.

As shown in FIG. 6A, the additional light distribution pattern PA is formed in a manner vertically crossing over the horizontal cut-off lines CL1, CL2 of the low-beam distribution pattern PL. In that situation, the additional light distribution pattern PA is formed as a horizontally long light distribution pattern extending in both the right and the left directions from the point H-V serving as a center.

As shown in FIG. 6B, the additional light distribution pattern PA1 is formed as a horizontally long light distribution pattern extending toward the right side from the line V-V. In that situation, the additional light distribution pattern PA1 is formed as a vertically symmetrical light distribution pattern with respect to a line H-H that is a horizontal line passing through the point H-V.

The additional light distribution pattern PA1 is formed as a synthesized light distribution pattern of a light distribution pattern PA1 A and a light distribution pattern PA1B, and formed at the left end edge thereof with a distinct vertical cut-off line CL3 extending in the vertical direction along the line V-V.

The light distribution pattern PA1A of the additional light distribution pattern PA1 is a light distribution pattern formed with the light from the light-emitting element 24L that has directly reached the projection lens 22 after being reflected by the left reflector 26L, whereas the light distribution pattern PA1B is a light distribution pattern formed with the light from the light-emitting element 24L that has reached the projection lens 22 after being reflected by the left reflector 26L and then by the left reflective surface 28aL of the double-sided mirror piece 28. The light distribution pattern PA1B is formed so as to overlap with the light distribution pattern PA1A in the left end portion of the light distribution pattern PA1A.

The vertical cut-off line CL3 in the additional light distribution pattern PA1 is formed as an inverted projection image of the front end edge 28b of the double-sided mirror piece 28 (front end edge of the left reflective surface 28aL, to be exact). In that situation, the vertical cut-off line CL3 is formed to be highly distinct because of being formed in the same position by each of the light distribution patterns PA1A, PA1B.

As shown in FIG. 6C, the additional light distribution pattern PA2 is formed to be a light distribution pattern laterally symmetrical to the additional light distribution pattern PA1 with respect to the line V-V. In other words, the additional light distribution pattern PA2 is formed as a horizontally long light distribution pattern extending toward the left side from the line V-V. In that situation, the additional light distribution pattern PA2 is formed as a synthesized light distribution pattern of a light distribution pattern PA2A that is formed with the light reflected from the right reflector 26R and directly reaching the projection lens 22, and a light distribution pattern PA2B that is formed with the light reflected from the right reflector 26R and reaching the projection lens 22 after being reflected by the right reflective surface 28aR of the double-sided mirror piece 28. The right end edge of the additional light distribution pattern PA2 is formed with a distinct vertical cut-off line CL4 extending in the vertical direction along the line V-V as an inverted projection image of the front end edge 28b of the double-sided mirror piece 28 (front end edge of the right reflective surface 28aR, to be exact).

Consequently, as shown in FIG. 6A, the additional light distribution pattern PA synthesized from the additional light distribution patterns PA1, PA2 is formed in a manner extending toward both the right and left sides from the directly forward direction of the lamp, in a state in which both of the vertical cut-off lines CL3, CL4 generally coincide with each other in the vicinity of the line V-V. However, because the front end edge 28b of the double-sided mirror piece 28 has a small amount of thickness, a small amount of clearance is provided between the vertical cut-off line CL3 and the vertical cut-off line CL4.

Next, operations and effects of the present embodiment will be described.

The vehicular illumination lamp 10 according to the present embodiment is provided with the two projector-type lamp units 20A, 20B, each of which is arranged with the pairs of right and left light-emitting elements 24L, 24R and reflectors 26L, 26R in the rear of the projection lens 22. Each of the lamp units 20A, 20B is configured such that the double-sided mirror piece 28 that is arranged so as to extend generally along the vertical plane including the optical axis Ax of the lamp unit and that is formed so that the front end edge 28b thereof passes through the rear side focal point F of the projection lens 22 reflects part of the reflected light from the left reflector 26L toward the left side and also reflects part of the reflected light from the right reflector 26R toward the right side. Therefore, the following effects are obtained.

In other words, the additional light distribution pattern PA1 (first light distribution pattern) formed with the reflected light from the left reflector 26L is formed at the left end edge thereof with the vertical cut-off line CL3 extending in the vertical direction in the forward direction of the lamp as the inverted projection image of the front end edge 28b of the double-sided mirror piece 28. On the other hand, the additional light distribution pattern PA2 (second light distribution pattern) formed with the reflected light from the right reflector 26R is formed at the right end edge thereof with the vertical cut-off line CL4 extending in the vertical direction in the forward direction of the lamp as the inverted projection image of the front end edge 28b of the double-sided mirror piece 28.

In that situation, because the left end portion of the additional light distribution pattern PA1 is formed by synthesizing the light that directly reaches the projection lens 22 after being reflected from the left reflector 26L and the light that reaches the projection lens 22 after being reflected from the left reflector 26L and then reflected by the double-sided mirror piece 28, distinction of the vertical cut-off line CL3 can be sufficiently ensured. In the same manner, because the right end portion of the additional light distribution pattern PA2 is formed by synthesizing the light that directly reaches the projection lens 22 after being reflected from the right reflector 26R and the light that reaches the projection lens 22 after being reflected from the right reflector 26R and then reflected by the double-sided mirror piece 28, distinction of the vertical cut-off line CL4 can be sufficiently ensured.

Consequently, by lighting the left light-emitting element 24L, the additional light distribution pattern PA1 having the distinct vertical cut-off line CL3 at the left end edge is formed in a manner extending toward the right side from the directly forward direction of the lamp. On the other hand, by lighting the right light-emitting element 24R, the additional light distribution pattern PA2 having the distinct vertical cut-off line CL4 at the right end edge is formed in a manner extending toward the left side from the directly forward direction of the lamp. In addition, by lighting both the light-emitting elements 24L, 24R at the same time, the additional light distribution pattern PA (third light distribution pattern) that is provided by synthesizing the additional light distribution patterns PA1, PA2 is formed in a manner extending toward both the right and left sides from the directly forward direction of the lamp, in the state in which both of the vertical cut-off lines CL3, CL4 generally coincide with each other.

Moreover, in the vehicular illumination lamp 10 according to the present embodiment, because each of the lamp units 20A, 20B is configured to be swiveled in the horizontal direction by driving each of the swivel mechanisms 50A, 50B, any one of the three additional light distribution patterns PA1, PA2, and PA can be selectively displaced in the lateral direction.

In that situation, by displacing the additional light distribution pattern PA1 in the lateral direction, the vertical cut-off line CL3 of the pattern can be formed in a state of being located near the right side of an oncoming vehicle or a leading vehicle. On the other hand, by displacing the additional light distribution pattern PA2 in the lateral direction, the vertical cut-off line CL4 of the pattern can be formed in a state of being located near the left side of the oncoming vehicle or the leading vehicle. In addition, when there is neither the oncoming vehicle nor the leading vehicle, a diffusion light distribution pattern can be formed in an appropriate direction depending on the degree of curvature of the vehicle running path, and so on, by displacing the additional light distribution pattern PA in the lateral direction.

As described above, with the present embodiment, in the vehicular illumination lamp 10 configured so as to form the additional light distribution pattern for high beam, visibility of the area ahead of the vehicle can be improved without giving glare to the driver of the oncoming vehicle or the leading vehicle.

In particular, because the vehicular illumination lamp 10 according to the present embodiment is provided with the two sets of the lamp units 20A, 20B and the swivel mechanisms 50A, 50B, it is made possible by appropriately combining the directions of both the lamp units 20A, 20B to radiate light to areas on both the right and left sides of the vehicle without giving glare to the driver of the oncoming vehicle or the leading vehicle. Consequently, visibility of the area ahead of the vehicle can be further improved.

Specifically, as shown in FIG. 4B, in the case in which there is a leading vehicle 2 running in the self-lane on the road surface in front of the vehicle, the additional light distribution pattern PA1 is formed in a position displaced to the right from the position shown in FIG. 4A by lighting only the left light-emitting element 24L of the one lamp unit 20A in a state in which the lamp unit 20A has been swiveled from the standard condition to the right by a predetermined angle by the swivel mechanism 50A, whereas the additional light distribution pattern PA2 is formed in a position displaced to the left from the position shown in FIG. 4A by lighting only the right light-emitting element 24R of the other lamp unit 20B in a state in which the lamp unit 20B has been swiveled from the standard condition to the left by the predetermined angle by the swivel mechanism 50B. Thus, the pair of additional light distribution patterns PA1, PA2 can be formed in a state in which the vertical cut-off lines CL3, CL4 thereof are located close to both the right and left sides, respectively, of the leading vehicle 2. Then, as a result, it is possible to radiate light to areas on both the right and left sides of the leading vehicle 2 without giving glare to the driver of the leading vehicle.

In addition, as shown in FIG. 5A, in the case in which there is an oncoming vehicle 4 running in the opposing-lane on the road surface in front of the vehicle, the additional light distribution pattern PA1 is formed in a position displaced by a relatively large amount to the right from the position shown in FIG. 4A by lighting only the left light-emitting element 24L of the one lamp unit 20A in a state in which the lamp unit 20A has been swiveled by a relatively large angle from the standard condition to the right by the swivel mechanism 50A, whereas the additional light distribution pattern PA2 is formed in a position displaced by a relatively small amount to the right from the position shown in FIG. 4A by lighting only the right light-emitting element 24R of the other lamp unit 20B in a state in which the lamp unit 20B has been swiveled by a relatively small angle from the standard condition to the right by the swivel mechanism 50B. Thus, the pair of additional light distribution patterns PA1, PA2 can be formed in a state in which the vertical cut-off lines CL3, CL4 thereof are located close to both the right and left sides, respectively, of the oncoming vehicle 4. Then, as a result, it is made possible to radiate light to areas on both the right and left sides of the oncoming vehicle 4 without giving glare to the driver of the oncoming vehicle.

In that situation, as shown in FIG. 5B, when the oncoming vehicle 4 comes close, the pair of additional light distribution patterns PA1, PA2 can be formed in a state in which the vertical cut-off lines CL3, CL4 thereof are located close to both the right and left sides, respectively, of the oncoming vehicle 4, by increasing the rightward swivel angles of both the lamp units 20A, 20B by angles different from each other depending on the position of the oncoming vehicle 4.

Note that the position of the leading vehicle 2 or the oncoming vehicle 4 on the virtual vertical screen can be detected in a simple manner, for example, by taking an image of a scene ahead of the vehicle with a CCD camera or the like, and by detecting the positions of tail lamps of the leading vehicle 2 in a lit state or the positions of headlamps of the oncoming vehicle 4 in a lit state as high concentration pixels, based on the captured image data.

Next, modifications of the embodiment will be described.

FIG. 7 is a view similar to FIG. 3 that shows a first modification of the lamp unit 20A (or 20B) according to the embodiment.

As shown in FIG. 7, although the basic configuration of a lamp unit 120A according to the present modification is the same as that of the lamp unit 20A of the embodiment, the configuration of a double-sided mirror piece 128 of the lamp unit 120A is different from that of the double-sided mirror piece 28 of the embodiment.

In other words, the double-sided mirror piece 128 has a horizontal cross-sectional shape of a wedge shape having, as the apex thereof, the rear side focal point F of the projection lens 22. In addition, the double-sided mirror piece 128 is formed integrally with the light source holder 32.

A front end edge 128b of the double-sided mirror piece 128 extends in the vertical direction in the vertical plane including the optical axis Ax. A left reflective surface 128aL and a right reflective surface 128aR of the double-sided mirror piece 128 are formed of flat surfaces that are slightly inclined relative to the vertical plane including the optical axis Ax.

By employing the lamp unit 120A according to the present modification, the position of the vertical cut-off line CL3 of the additional light distribution pattern PA1 and the position of the vertical cut-off line CL4 of the additional light distribution pattern PA2 can exactly coincide with each other. Then, as a result, the additional light distribution pattern PA can be formed as a light distribution pattern in which the vertical cut-off line CL3 and the vertical cut-off line CL4 coincide with each other without a gap therebetween.

FIG. 8 is a view similar to FIG. 3 that shows a second modification of the lamp unit 20A (or 20B) of the embodiment.

As shown in the same figure, although the basic configuration of a lamp unit 220A according to the present modification is the same as that of the lamp unit 20A of the embodiment, the configuration of a double-sided mirror piece 228 of the lamp unit 220A is different from that of the double-sided mirror piece 28 of the embodiment.

In other words, a front end edge 228b of the double-sided mirror piece 228 is formed so as to pass not through the rear side focal point F of the projection lens 22, unlike the front end edge 28b of the double-sided mirror piece 28 of the embodiment, but through a point located on the rear side of the rear side focal point F.

In that situation, the double-sided mirror piece 228 has the same cross-sectional shape as that of the double-sided mirror piece 28 of the embodiment, and is formed so that the front end edge 228b thereof extends in the vertical direction.

FIG. 9 shows views similar to FIG. 4 that illustrates operations of the present modification.

As shown in FIG. 9A, by employing the lamp unit 220A according to the present modification, under the standard condition, the position in which the vertical cut-off line CL3 of the additional light distribution pattern PA1 is formed can be offset to the left of the line V-V, and also the position in which the vertical cut-off line CL4 of the additional light distribution pattern PA2 is formed can be offset to the right of the line V-V, although the distinction of the vertical cut-off lines CL3, CL4 of the additional light distribution patterns PA1, PA2, respectively, is somewhat degraded. Consequently, the additional light distribution pattern PA can be formed as a light distribution pattern in which the additional light distribution pattern PA1 and the additional light distribution pattern PA2 partially overlap with each other.

In addition, as shown in FIG. 9B, by displacing the additional light distribution pattern PA1 to the right by a slightly larger angle than that in the case of the embodiment, and also by displacing the additional light distribution pattern PA2 to the left by a slightly larger angle than that in the case of the embodiment, the pair of additional light distribution patterns PA1, PA2 can be formed in a state in which the vertical cut-off lines CL3, CL4 thereof are located close to both the right and left sides, respectively, of the leading vehicle 2. Then, as a result, it is made possible to radiate light to areas on both the right and left sides of the leading vehicle 2 without giving glare to the driver of the leading vehicle.

Also in the case in which there is the oncoming vehicle, the same operations and effects as those in the case in which there is the leading vehicle can be obtained by performing the same control as that in the case of the embodiment.

Note that, in the additional light distribution patterns PA1, PA2 shown in FIG. 9B, the extensions of portions occupied by the light distribution patterns PA1A, PA2A, respectively, are slightly larger, whereas the extensions of portions occupied by the light distribution patterns PA1B, PA2B, respectively, are slightly smaller, compared with those in the additional light distribution patterns PA1, PA2, respectively, shown in FIG. 4B, because the front end edge 228b of the double-sided mirror piece 228 is located on the rear side of the rear side focal point F of the projection lens 22.

In the embodiment, description has been made on the assumption that each of the light-emitting elements 24L, 24R has the light-emitting chip 24a provided with the horizontally arranged four light-emitting chips, each of which has the square light-emitting surface of approximately 1 mm on a side, so as to be generally in close contact with each other. However, it is obviously possible to configure the light-emitting elements 24L, 24R so as to have light-emitting chips having other shapes or sizes. By using such a configuration, it is possible to adjust shapes or brightness of the additional light distribution patterns PA, PA1, PA2 in an appropriate manner.

In the embodiment, description has been made on the assumption that the vehicular illumination lamp 10 is provided with the two sets of the lamp units 20A, 20B and the swivel mechanisms 50A, 50B. However, instead of the configuration described above, it is also possible to have a configuration in which the vehicular illumination lamp of one of the pair of right and left headlamps is provided with one set of the lamp unit 20A and the swivel mechanism 50A, and also the vehicular illumination lamp of the other of the pair of right and left headlamps is provided with the other set of the lamp unit 20B and the swivel mechanism 50B. In the case of employing such a configuration, in the same way as in the case of the embodiment, it is also made possible to radiate light to areas on both the right and left sides of the oncoming vehicle or the leading vehicle without giving glare to the driver of the vehicle, by appropriately combining the directions of both the lamp units 20A, 20B. Consequently, visibility of the area ahead of the vehicle can be sufficiently improved.

Note that the numerical values represented as dimensions in the embodiment and the modifications thereof are merely examples, and may obviously be set to different values as appropriate.

### [Description of the Reference Numerals]

2 LEADING VEHICLE
4 ONCOMING VEHICLE
10 VEHICULAR ILLUMINATION LAMP
12 LAMP BODY
14 TRANSLUCENT COVER
20A, 20B, 120A, 220A LAMP UNIT
22 PROJECTION LENS
24L, 24R LIGHT-EMITTING ELEMENT
24a LIGHT-EMITTING CHIP
24b SUBSTRATE
24c SUPPORTING PLATE
26L, 26R REFLECTOR
26La, 26Ra REFLECTIVE SURFACE
28, 128, 228 DOUBLE-SIDED MIRROR PIECE
28aL, 128aL, 228aL LEFT REFLECTIVE SURFACE
28aR, 128aR, 228aR RIGHT REFLECTIVE SURFACE
28b, 128b, 228b FRONT END EDGE
30 LENS HOLDER
30a BRACKET PORTION
32 LIGHT SOURCE HOLDER
32a HEAT SINK
32b FRONT END SURFACE
50A, 50B SWIVEL MECHANISM
52 FRAME MEMBER
54 ACTUATOR
Ax OPTICAL AXIS
Ax1 AXIS LINE
CL1, CL2 HORIZONTAL CUT-OFF LINE
CL3, CL4 VERTICAL CUT-OFF LINE
E ELBOW POINT
F REAR SIDE FOCAL POINT
HZ HOT ZONE
PA, PA1, PA2 ADDITIONAL LIGHT DISTRIBUTION PATTERN
PA1A, PA1B, PA2A, PA2B LIGHT DISTRIBUTION PATTERN
PH HIGH-BEAM DISTRIBUTION PATTERN
PL LOW-BEAM DISTRIBUTION PATTERN

## Claims

1. A vehicular illumination lamp (10) configured so as to form an additional light distribution pattern in addition to a low-beam distribution pattern when a high-beam distribution pattern is formed, the vehicular illumination lamp (10) comprising:
a lamp unit (20A) comprising:
a projection lens (22) arranged on an optical axis (Ax) extending in a vehicular longitudinal direction;
a pair of light-emitting elements (24L, 24R) arranged in the vicinity of the optical axis (Ax) and on a rear side of a rear side focal point (F) of the projection lens (22);
a pair of reflectors (26L, 26R) that are arranged so as to cover the pair of light-emitting elements (24L, 24R) and that reflect light from the light-emitting elements (24L, 24R) in a direction approaching the optical axis (Ax) toward the front; and
a double-sided mirror piece (28) that is arranged so as to extend between the pair of reflectors (26L, 26R) and the projection lens and that is formed so that a front end edge thereof passes through the rear side focal point (F) of the projection lens (22),
**characterized in that**
the pair of light-emitting elements (24L, 24R) face towards a left side and a right side, respectively,
the pair of reflectors (26L, 26R) cover the pair of light-emitting elements (24L, 24R) from the left side and the right side, respectively,
the double-sided mirror piece (28) is arranged so as to extend generally along a vertical plane including the optical axis (Ax) and is configured so as to reflect part of the reflected light from the left reflector (26L) towards the left side and part of the reflected light from the right reflector (26R) towards the right side, and that the vehicular illumination lamp
comprises a swivel mechanism (50A) that swivels the lamp unit (20A) in a horizontal direction.

2. The vehicular illumination lamp according to claim 1, **characterized in that** the double-sided mirror piece (28) has a horizontal cross-sectional shape of a generally wedge shape having, as the apex thereof, the rear side focal point (F) of the projection lens (22).

3. The vehicular illumination lamp according to claim 1, **characterized in that** the front end edge (28b) of the double-sided mirror piece (28) is formed so as to pass not through the rear side focal point (F) of the projection lens (22) but through a point located on a rear side of the rear side focal point (F).

4. The vehicular illumination lamp according to any one of claims 1 to 3, **characterized in that**
the vehicular illumination lamp comprises two sets of the lamp unit (20A, 20B) and the swivel mechanism (50A, 50B).

## Patentansprüche

1. Fahrzeugscheinwerfer (10), der derart ausgestaltet ist, dass er ein zusätzliches Lichtverteilungsmuster zusätzlich zu einem Abblendlicht-Verteilungsmuster ausbildet, wenn ein Fernlicht-Verteilungsmuster ausgebildet ist, wobei der Fahrzeugscheinwerfer (10) aufweist:
eine Lampeneinheit (20A) mit:
einer Projektionslinse (22), die auf einer optischen Achse (Ax) angeordnet ist, die sich in einer Fahrzeuglängsrichtung erstreckt;
einem Paar lichtemittierender Elemente (24L, 24R), das in einer Umgebung der optischen Achse (Ax) auf einer Rückseite eines rückseitigen Brennpunkts (F) der Projektionslinse (22) angeordnet ist;
einem Paar Reflektoren (26L, 26R), die derart angeordnet sind, dass sie das Paar lichtemittierender Elemente (24L, 24R) bedecken und die einen Teil des Lichts von den lichtemittierenden Elementen (24L, 24R) in eine Richtung reflektieren, die sich der optischen Achse (Ax) zu der Vorderseite hin, annähert; und
einem doppelseitigen Spiegelstück (28), das derart angeordnet ist, um sich zwischen dem Paar Reflektoren (26L, 26R) und der Projektionslinse zu erstrecken und das so ausgebildet ist, dass eine Vorderendkante davon durch den rückseitigen Brennpunkt (F) der Projektionslinse (22) läuft,
**dadurch gekennzeichnet, dass**
das Paar lichtemittierender Elemente (24L, 24R) zu einer linken bzw. einer rechten Seite hin gewandt ist,
das Paar Reflektoren (26L, 26R), das Paar lichtemittierender Elemente (24L, 24R) von der linken bzw. der rechten Seite her bedeckt,
das doppelseitige Spiegelstück (28) derart angeordnet ist, dass es sich allgemein entlang einer vertikalen Ebene, welche die optische Achse (Ax) aufweist, erstreckt und so aufgebaut ist, dass es einen Teil des von dem linken Reflektor (26L) reflektierten Lichts zu der linken Seite hin und einen Teil des von dem rechten Reflektor (26R) reflektierten Lichts zu der rechten Seite hin reflektiert,
und dadurch dass der Fahrzeugscheinwerfer einen Schwenkmechanismus (50A) aufweist, der die Lampeneinheit (20A) in einer horizontalen Richtung schwenkt.

2. Fahrzeugscheinwerfer nach Anspruch 1, **dadurch gekennzeichnet, dass**:
das doppelseitige Spiegelstück (28) eine horizontale Querschnittsform einer allgemein keilförmigen Form aufweist, die als Spitze davon den rückseitigen Brennpunkt (F) der Projektionslinse (22) aufweist.

3. Fahrzeugscheinwerfer nach Anspruch 1, **dadurch gekennzeichnet, dass**:
die Vorderendkante (28b) des doppelseitigen Spiegelstücks (28) so ausgebildet ist, dass sie nicht durch den rückseitigen Brennpunkt (F) der Projektionslinse (22) läuft aber durch einen Punkt läuft, der auf einer Rückseite des rückseitigen Brennpunkts (F) angeordnet ist.

4. Fahrzeugscheinwerfer nach einem der Ansprüche 1 bis 3, **dadurch gekennzeichnet, dass**:
der Fahrzeugscheinwerfer zwei Sätze der Lampeneinheiten (20A, 20B) und des Schwenkmechanismus (50A, 50B) aufweist.

## Revendications

1. Lampe d'éclairage pour véhicule (10) configurée de façon à former un schéma de distribution de lumière supplémentaire s'ajoutant à un schéma de distribution de feu de croisement lorsqu'un schéma de distribution de feu de route est formé, la lampe d'éclairage pour véhicule (10) comprenant :
une unité de lampe (20A) comprenant :
- un objectif de projection (22) agencé sur un axe optique (Ax) s'étendant dans une direction longitudinale de véhicule ;
- une paire d'éléments électroluminescents (24L, 24R) agencés au voisinage de l'axe optique (Ax) et sur un côté arrière d'un foyer côté arrière (F) de l'objectif de projection (22) ;
- une paire de réflecteurs (26L, 26R) qui sont agencés de façon à recouvrir la paire d'éléments électroluminescents (24L, 24R) et qui réfléchissent la lumière provenant des éléments électroluminescents (24L, 24R) dans une direction s'approchant de l'axe optique (Ax) vers l'avant ; et
- un article de miroir double face (28) qui est agencé de façon à s'étendre entre la paire de réflecteurs (26L, 26R) et l'objectif de projection et qui est formé de façon à ce qu'un bord d'extrémité avant de celui-ci traverse le foyer côté arrière (F) de l'objectif de projection (22), **caractérisé en ce que**
la paire d'éléments électroluminescents de (24L, 24R) est orientée vers un côté gauche et un côté droit, respectivement,
la paire de réflecteurs (26L, 26R) recouvre la paire d'éléments électroluminescents (24L, 24R) depuis le côté gauche et le côté droit, respectivement, l'article de miroir double face (28) est agencé de façon à s'étendre généralement le long d'un plan vertical incluant l'axe optique (Ax) et est configuré de façon à réfléchir une partie de la lumière réfléchie par le réflecteur gauche (26L) vers le côté gauche et une partie de la lumière réfléchie par le réflecteur droit (26R) vers le côté droit, et **en ce que** la lampe d'éclairage pour véhicule comprend un mécanisme de pivot (50A) qui fait pivoter l'unité de lampe (20A) dans une direction horizontale.

2. Lampe d'éclairage pour véhicule selon la revendication 1, **caractérisée en ce que** l'article de miroir double face (28) a une forme en coupe horizontale généralement en coin ayant, comme sommet, le foyer côté arrière (F) de l'objectif de projection (22).

3. Lampe d'éclairage pour véhicule selon la revendication 1, **caractérisée en ce que** le bord d'extrémité avant (28b) de l'article de miroir double face (28) est formé de façon à ne pas traverser le foyer côté arrière (F) de l'objectif de projection (22) mais à traverser un point situé sur un côté arrière du foyer côté arrière (F).

4. Lampe d'éclairage pour véhicule selon l'une quelconque des revendications 1 à 3, **caractérisée en ce que**
la lampe d'éclairage pour véhicule comprend deux jeux d'unités de lampe (20A, 20B) et le mécanisme de pivot (50A, 50B).
